# EUROPÄISCHE PATENTSCHRIFT

(11) **EP 0 714 524 B1**
(45) Veröffentlichungstag und Bekanntmachung des Hinweises auf die Patenterteilung: **14.08.2002**
(21) Anmeldenummer: 95918625.5
(22) Anmeldetag: 26.04.1995
(51) Int. Cl.: G02C 5/22

(54) **BRILLENSCHARNIER**
SPECTACLE HINGE
MONTAGE A CHARNIERE POUR LUNETTES

(30) Priorität: 17.06.1994 DE 4421309
(43) Veröffentlichungstag der Anmeldung: 05.06.1996
(73) Patentinhaber: Optische Werke G. Rodenstock, 80469 München (DE)
(72) Erfinder: WANDINGER, Jakob, D-84478 Waldkraiburg (DE)
(74) Vertreter: Münich, Wilhelm, Dr.
(86) Internationale Anmeldenummer: EP9501699
(87) Internationale Veröffentlichungsnummer: WO9535524

(56) Entgegenhaltungen:
- EP-A- 0 217 763
- WO-A-93/22704
- DE-A- 3 404 511
- GB-A- 576 400
- US-A- 1 504 212
- US-A- 4 153 347
- PATENT ABSTRACTS OF JAPAN vol. 12, no. 284 (P-740) 4. August 1988 & JP,A,63 063 019 (NKON CORP) 19. März 1988
- PATENT ABSTRACTS OF JAPAN vol. 11, no. 389 (P-648) 19. Dezember 1987 & JP,A,62 153 931 (CITIZEN WATCH CO LTD) 8. Juli 1987

## Beschreibung

Die Erfindung betrifft eine Scharnierverbindung zwischen einem Brillenbügel und einer Fassung für Brillengläser gemäß Oberbegriff von Patentanspruch 1.

Scharnierverbindungen der vorstehend genannten Art haben den Vorteil, daß bei diesen auf Scharnierschrauben oder andere lose Verbindungsteile und zusätzliche Federelemente herkömmlicher Scharniere verzichtet werden kann. Bei herkömmlichen Scharnieren ist es schwierig, die Scharnierschraube so zu befestigen, daß das Scharnier einerseits nicht zu schwergängig ist, andererseits sich die Scharnierschraube aber auch nicht lösen kann, so daß das Scharnier keine Gangregulierung mehr besitzt.

Einfacher sind Scharnierverbindungen, die ohne Scharnierschraube oder andere lose Verbindungsteile und zusätzliche Federelemente auskommen.

Durch die US-PS 1 504 212 ist eine Scharnierverbindung für eine Brillenfassung bekannt, bei der ein Gelenkelement und ein Aufnahmeelement unmittelbar kuppelbar sind Zur Kupplung kann ein Stift, aus dem ein zur Befestigung eines Brillenbügels dienender Fortsatz seitlich herausragt, durch Verschieben in Richtung seiner Längsachse in das Aufnahmeelement eingeführt werden. Um den Stift zusammen mit dem Fortsatz in das Aufnahmeelement einführen zu können, besitzt das Aufnahmeelement einen T-förmigen Schlitz. Die Einbringöffnung für den Fortsatz liegt innerhalb des beim Verschwenken des Brillenbügels zwischen der Bügelaufschlagstellung und der Bügeleinschlagstellung sich ergebenden Schwenkbereich des Fortsatzes. Diese bekannte Scharnierverbindung hat den Nachteil, daß eine Schraubenmutter zur Sicherung der Verbindung erforderlich ist.

Durch die DE-A1-34 04 511 ist ein Scharnier mit zwei inandergreifenden Scharnierteilen, die schwenkbar miteinander verbunden sind, bekannt. Die Brillenbügel besitzen an jedem mit der Fassung zu verbindenden Ende ein als Gelenkelement ausgebildetes Scharnierteil, das mit einem weiteren Scharnierteil an der Brillenfassung, das als Aufnahmeelement ausgebildet ist, unmittelbar kuppelbar ist.

An die Stelle einer Verschraubung tritt bei diesem Scharnier ein Aufschnappen, Aufrasten bzw. Einschnappen eines Scharnierteils in das andere ("Schnappeffekt"). Dabei ist es erforderlich, Teile des Aufnahmeelementes aufzuweiten. Das Material muß daher eine sehr hohe Eigenelastizität besitzen, um die notwendigen elastischen Verformungen zu ermöglichen (die lichte Weite des "Aufsteckkanals" ist z.B. um 20 % kleiner als der Durchmesser des einrastenden Zapfens). Es gibt aber kaum Materialien, die zudem auch noch die für ein Brillenscharnier erforderliche Festigkeit und Verbindbarkeit mit anderen Materialien besitzen.

Um eine ausreichende Festigkeit zu erzielen, ist zudem das als Aufnahmeelement ausgebildete Scharnierteil so groß zu dimensionieren, daß es für schmale Backen und Brillenbügel nicht geeignet ist. Schließlich kann der Brillenbügel nicht nur in der Brilleneinschlagstellung, sondern auch in der Brillenaufschlagstellung sowie in jeder beliebigen Zwischenstellung demontiert werden. Dies ist jedoch aus Sicherheitsgründen nachteilig.

Gegenstand der FR-PS-1 226 049 ist ebenfalls eine Scharnierverbindung mit "Schnappeffekt". Hierbei ist die Einbringöffnung für ein Gelenkelement so angeordnet, daß der einzubringende Teil im sich ergebenden Schwenkbereich nicht in die Einbringöffnung gelangt. Die Scharnierverbindung ist für Scharniere mit möglichst kleinen Dimensionen und insbesondere für Metallfassungen mit kleinen Dimensionen ungeeignet. Das Scharniermaterial muß ebenfalls die zur DE-A1-34 04 511 angegebenen Materialeigenschaften haben.

Auch bei der durch die DE-A1-42 14 531 bekannten Scharniervberbindung ist das Scharnierteil des Brillenbügels mit einem Scharnierteil an der Fassung unmittelbar kuppelbar. Nach einer der Ausführungsformen, die allerdings nur für Kunststoff-Fassungen geeignet ist, ist am Brillenbügel ein Zapfen angebracht, der an seinem freien Ende einen radial vorspringenden Ansatz besitzt. Der Zapfen wird in eine Bohrung an der Fassung eingesetzt. wobei zur Montage der Ansatz durch eine Nut am Innenumfang der Bohrung geführt wird.

Bei diesem Scharnier ist die Verbindung zwischen Zapfen und Brillenbügel hohen Belastungen ausgesetzt. Dies bedeutet entweder eine wenig stabile Gelenkverbindung oder, daß nicht nur die Fassung in der Nähe der Seitenränder. sondern auch der Zapfen verstärkt ausgebildet sein muß. Die Anwendung des bekannten Scharniers ist somit auf Kunststoff-Fassungen mit relativ großem Scharnier und damit breiten Bügeln eingeschränkt. Das Scharnierteil der Fassung (Mittelteilscharnier) ist bei der bekannten Fassung gegenüber dem Bügel versetzt. Dadurch eignet sich das bekannte Scharnier beispielsweise für Bügel-Backekombinationen nicht. Schließlich ist bei der bekannten Scharnierverbindung der für eine Gangregulierung erforderliche Reibungswiderstand nicht gewährleistet. Die vorgeschlagenen Höcker oder Rippen am Zapfen führen zu einer starken Abnutzung der Rippen und Nuten und damit zu einem raschen Nachlassen der gewünschten Gangregulierung.

Der Erfindung liegt die Aufgabe zugrunde, ein Scharnier der eingangs geschilderten Art anzugeben, das nicht nur bei speziellen Scharnierarten, sondern bei möglichst allen Brillenscharniertypen eingesetzt werden kann. Das Scharnier soll zudem möglichst kleine Dimensionen besitzen und dennoch eine stabile, leicht montierbare Verbindung der Scharnierteile ermöglichen.

Diese Aufgabe wird erfindungsgemäß durch die kennzeichnenden Merkmale des Anspruches 1 gelöst.

Beim vorgeschlagenen Scharnier wird ein Einrasten des Gelenkelementes in das Aufnahmeelement vermieden. Gegenüber der mit "Schnappeffekt" zu montierenden Scharnieren hat das vorgeschlagene Scharnier den Vorteil, daß das Aufnahmeelement keine extremen Elastizitätseigenschaften aufweisen muß. Die Montage bzw. Demontage erfolgt, indem das Gelenkelement zusammen mit dem Bügel in eine Position relativ zum Aufnahmeelement gebracht wird, in der das Gelenkelement durch Verschieben in Richtung der Längsachse des Stiftes über die Stiftaufnahmeöffnungen und die Einbringöffnung in das Aufnahmeelement hineingeschoben werden kann. Beim Einbringen wird der Fortsatz durch die Einbringöffnung bewegt. Der Fortsatz besitzt demzufolge eine Form, die es ermöglicht, ihn durch die Einbringöffnung hindurchzuführen und aufgrund deren er sich nach dem Einbringen innerhalb der beiden Arme verschwenken lässt. Der Fortsatz ist dabei so dimensioniert, daß er im wesentlichen ohne Reibung mit den Armen des Aufnahmeelementes bewegbar ist, aber dennoch eine axiale Verschiebesicherung für den Stift bildet.

Das vorgeschlagene Scharnier besteht somit nur aus einem Gelenkelement und einem Aufnahmeelement, die ohne weitere Verbindungsteile wie Scharnierschrauben, also unmittelbar kuppelbar sind. Selbstverständlich sind Montage bzw. Demontage auf einfache Weise, d.h. allenfalls mit einfachen Hilfsmitteln durchführbar.

Beim vorgeschlagenen Scharnier ragen aus dem Fortsatz beidseitig Stiftenden heraus. Die Stiftlängsachse ist zugleich Schwenkachse des Brillenbügels. Da die beiden Stiftenden jeweils von einem Arm des Aufnahmeelementes umschlossen werden, ist die Verbindung zwischen Fassung und Brillenbügel stabil. Unter anderem auch aus diesem Grund können die Abmessungen des vorgeschlagenen Scharniers sehr klein gehalten werden. Das Scharnier eignet sich somit hervorragend auch für Metallfassungen, deren Bügel sehr kleine Querschnittsflächen besitzen. Da der Fortsatz und damit der Bügel in der Stiftmitte befestigt ist, sind Brillenbügel und das Fassungscharnierteil nicht versetzt zueinander angeordnet, sondern befinden sich auf gleicher Höhe.

Die vorgeschlagene Scharnierverbindung lässt sich durch geeignete Umgestaltung bei praktisch allen Fassungs- bzw. Scharniertypen einsetzen. Unter anderem auch bei Federscharnieren. Von besonderer Bedeutung ist auch die Möglichkeit, auf einfache Weise eine Gangregulierung erzielen zu können, die über einen langen Zeitraum hinweg ein im wesentlichen konstantes Bremsmoment besitzt. Beim vorgeschlagenen Scharnier sind die Stiftaufnahmeöffnungen an die Stiftenden angepasst, d.h. sie sind hinsichtlich ihres Durchmessers aufeinander abgestimmt. Da einer der Arme das Stiftende nur teilweise unter Bildung einer Einbringöffnung für den Fortsatz umschließt, ist es auf einfache Weise möglich, daß durch diesen Arm eine Vorspannung in radialer Richtung auf das zugehörige Stiftende ausgeübt wird.

Üblicherweise ist bei einer Brille eine Begrenzung des Brillenbügel-Schwenkbereichs durch die Fassung (das Brillenmittelteil) bzw. durch die Scharniere (Scharnierstoßflächen) vorgesehen. Befindet sich nun die Einbringöffnung außerhalb des in Anspruch 1 angegebenen Schwenkbereiches für den Fortsatz, so ist ein unbeabsichtigtes Lösen des Brillenbügels von der Fassung der Brillengläser, also dem Mittelteil der Brille nicht möglich. Die Einbringöffnung kann an einer Stelle vorgesehen sein, die der Fortsatz einnimmt, wenn der Brillenbügel an der Fassung anliegt und leicht durchgebogen wird, d.h. über die Bügeleinschlagstellung hinaus auf die Fassung zu bewegt wird.

Grundsätzlich ist es möglich, daß der zweite Arm das zugehörige Stiftende vollständig umschließt.

In einer bevorzugten Ausgestaltung kann aber auch der zweite Arm das zugehörige Stiftende nur teilweise unter Bildung eines Spaltes umschließen.

In einer weiteren Variante der Erfindung ist es vorteilhaft (Anspruch 3), wenn wenigstens einer der Arme unter Vorspannung am jeweiligen Stiftende anliegt und so ein Reibmoment (Gangregulierung) ausübt. Insbesondere ist es möglich, daß beide Arme unter Vorspannung an den jeweiligen Stiftenden anliegen.

In einer weiteren einfach zu fertigenden Variante des erfindungsgemäßen Scharniers, ist der Stift mit dem Fortsatz und dieser mit einem Basisteil verbunden. Das Basisteil kann z.B. durch Löten oder Schweißen mit dem Bügel verbunden werden. Bevorzugterweise sind Fortsatz und Basisteil aus einem Stück gefertigt.

In einer anderen Ausgestaltung der Erfindung hat es sich als vorteilhaft erwiesen, wenn der Fortsatz in das mit der Fassung zu verbindende Ende des Brillenbügels integriert ist, derart, daß der Brillenbügel an seinem mit der Fassung zu verbindenden Ende lediglich einen Stift aufweist, dessen Längsachse im wesentlichen senkrecht zur Bügellängsachse verläuft. In dieser Variante kann ein besonders zierlicher Bügel verwendet werden. Der Fortsatz kann z.B. ohne größere Veränderung seiner Querschnittsform in den Bügel mit etwa gleicher Querschnittsform übergehen. Bügel und Stift können z.B. aber auch unterschiedliche Durchmesser bzw. Querschnittsflächen haben. In diesen Fällen ist der Stift quasi direkt am Bügelende befestigt, wobei die beiden Längsachsen im wesentlichen senkrecht zueinander verlaufen.

Zur Vereinfachung der Montage und Demontage hat es sich als günstig erwiesen, wenn die Stiftenden unterschiedliche Durchmesser haben. Bei der Montage kann das Stiftende mit kleinerem Durchmesser leichter durch die für das Stiftende mit dem größeren Durchmesser vorgesehene Stiftaufnahmeöffnung hindurch geführt werden.

Weitere vorteilhafte Ausgestaltungen der Erfindung sind in den Unteransprüchen 8 bis 11 angegeben.

Selbstverständlich liegt auch eine Variante im Rahmen der beanspruchten Scharnierverbindung, bei der das den Stift aufweisende Gelenkelement nicht am Bügel, sondern an dem Brillenmittelteil (Fassung) bzw. der Backe und das Aufnahmeelement am Bügel angeordnet ist.

Im folgenden sollen anhand schematischer Skizzen Ausführungsbeispiele einer erfindungsgemäßen Scharnierverbindung erläutert werden.

Es zeigen:
- Figuren 1 bis 5:: Eine erste Ausführungsform eines Gelenkelementes in Draufsicht, Seitenansicht und Vorderansicht.
- Figuren 6 bis 10:: Eine Ausführungsform eines Aufnahmeelementes für ein in den Figuren 1 bis 5 dargestelltes Gelenkelement.
- Figur 11:: Eine Darstellung, in der das Gelenkelement im Aufnahme-element montiert ist.
- Figuren 12bis15:: Eine zweite Ausführungsform eines Gelenkelementes in Vorderansicht, Seitenansicht und Draufsicht.
- Figuren 16bis20:: Eine Ausführungsform eines Aufnahmeelementes für ein in den Figuren 12 bis 15 dargestellten Gelenkelementes.

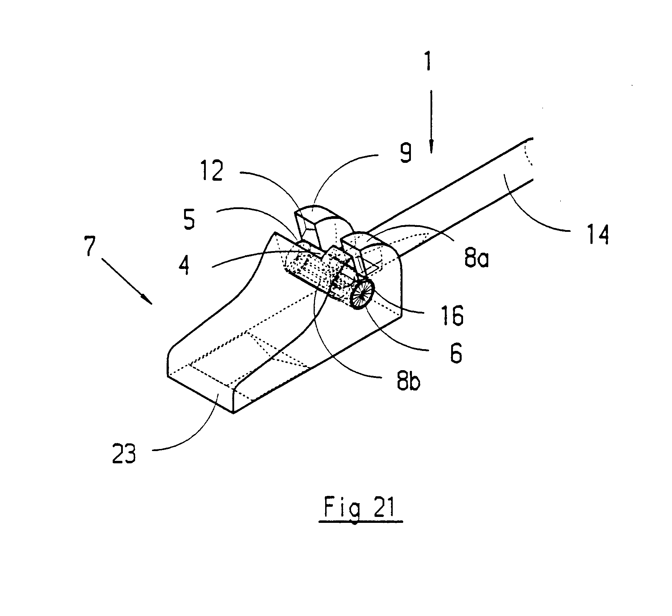

- Figur 21:: Eine Darstellung, in der das Gelenkelement gemäß Figuren 12 bis 15 in einem Aufnahmeelement gemäß Figuren 16 bis 20 montiert ist.
- Figur 22:: Eine schematische Skizze einer Brille, wobei verschiedene Stellungen des Brillenbügels dargestellt sind.
- Figur 23:: Eine schematisch vereinfachte Darstellung einer Scharnierverbindung, wobei das Gelenkelement sowohl in der Montage-bzw. Demontagestellung als auch in der Bügelaufschlagsstellung dargestellt ist.

In den Figuren sind übereinstimmende Teile mit denselben Bezugszeichen versehen.

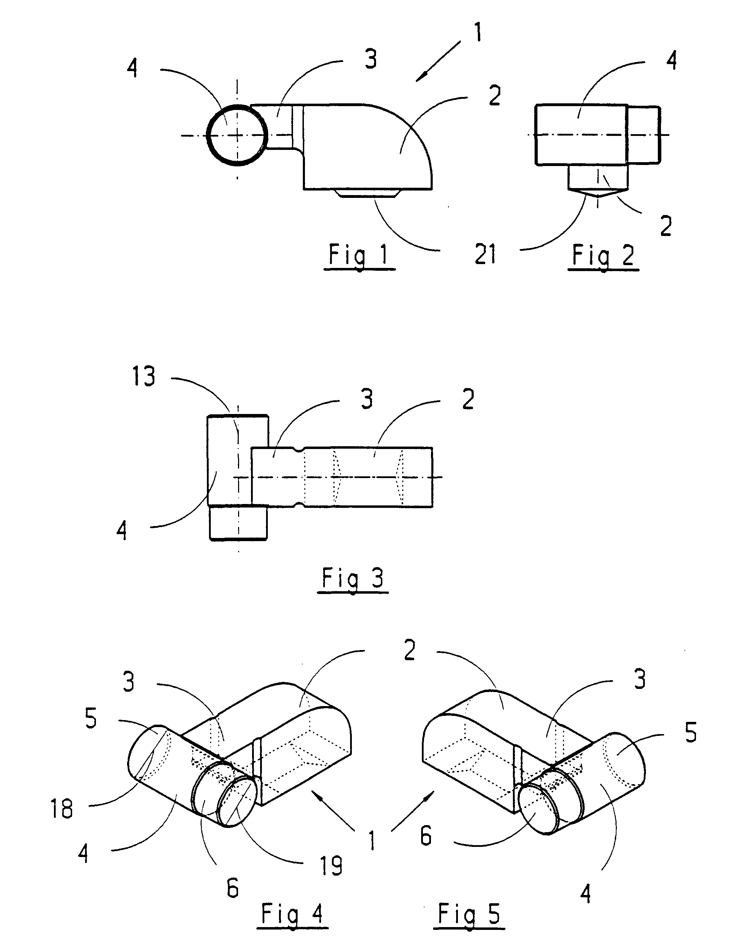

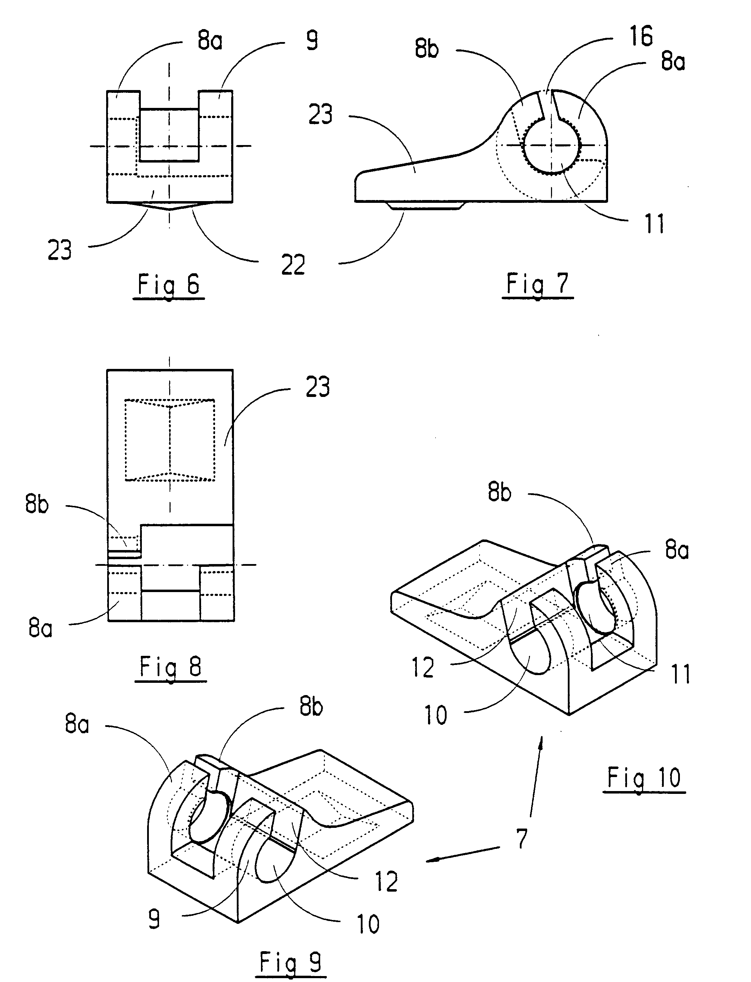

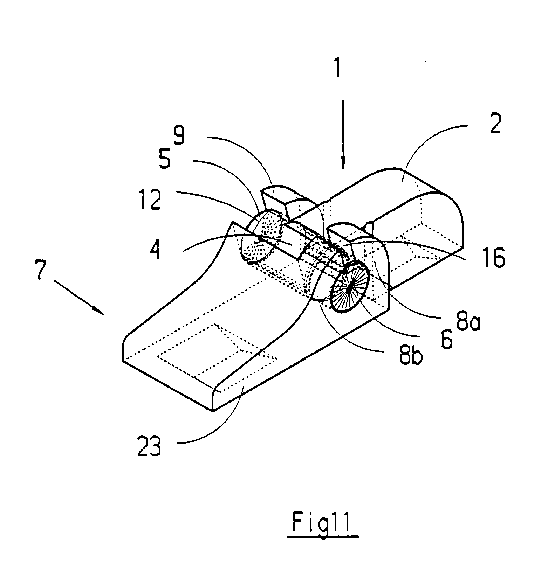

In Fig. 1 is eine Vorderansicht, in Fig. 2 eine Seitenansicht, in Fig. 3 eine Draufsicht und in den Figuren 4 und 5 eine Schrägansicht eines linken bzw. eines rechten Gelenkelementes 1 dargestellt. An einem Basisteil 2 ist ein Fortsatz 3 angeformt, an dessen dem Basisteil 2 gegenüberliegenden Ende ein Stift 4 befestigt ist. Das Basisteil 2 kann beispielsweise durch Schweißen an einem nicht dargestellten Bügel an dessen mit der Fassung zu verbindenden Ende verschweißt sein. Zur Verschweißung können beispielsweise Schweißwarzen 21 dienen. Die beiden Enden 5,6 des Stiftes ragen auf gegenüberliegenden Seiten des Fortsatzes 3 über diesen hinaus. Mit Bezugszeichen 13 ist die Längsachse des Stiftes bezeichnet. Mit Bezugszeichen 18 und 19 sind die Durchmesser der Stiftenden 5,6, die zur Erleichterung der Montage und Demontage unterschiedlich sein können, bezeichnet. Der in den Figuren 1 bis 5 nicht dargestellte Brillenbügel ist somit an seinem mit der Fassung zu verbindende Ende als Gelenkelement ausgebildet. Das zugehörige Aufnahmeelement 7 an der Fassung, mit dem das Gelenkelement 1 ohne Aufschnappen unmittelbar kuppelbar ist, ist in den Figuren 6 bis 10 dargestellt. Fig. 6 zeigt eine Vorderansicht. Fig. 7 eine Seitenansicht, Fig. 8 eine Draufsicht und die Figuren 9 und 10 eine Schrägsicht auf ein linkes und auf ein rechtes Aufnahmeelement. An ein Basisteil 23 sind Arme 8a, 8b und 9 angeformt. Die Arme 8a, 8b einerseits und Arm 9 andererseits sind mit Abstand zueinander in etwa parallelen Ebenen angeordnet. Arm 9 umschließt eine Stiftaufnahmeöffnung 10. Die Arme 8a und 8b umschließen eine Stiftaufnahmeöffnung 11. Das Aufnahmeelement 7 kann z.B.durch Schweißen an der Fassung befestigt werden. Hierzu dienen Schweißwarzen 22.

In Fig. 11 sind Gelenkelement 1 und Aufnahmeelement 7 in Funktionsstellung dargestellt. Es ist zu erkennen, daß das über den Fortsatz 3 des Gelenkelementes 1 hinausragende Ende 5 des Stiftes 4 von Arm 9 umschlossen wird, während das Ende 6 des Stiftes 4 von den Armen 8a, 8b umschlossen wird. Arm 9 umschließt das Stiftende 5 nur teilweise unter Bildung einer Einbringungöffnung 12. Der zweite Arm 8a, 8b umschließt das zugehörige Stiftende 6 ebenfalls nur teilweise unter Bildung eines Spaltes 16. Aufgrund des Spaltes 16 sowie der Einbringöffnung 12 ist es möglich, daß die Arme 8a, 8b, 9 unter Vorspannung am jeweiligen Stiftende 5,6 anliegen. Hierdurch wird eine Gangregulierung gewährleistet.

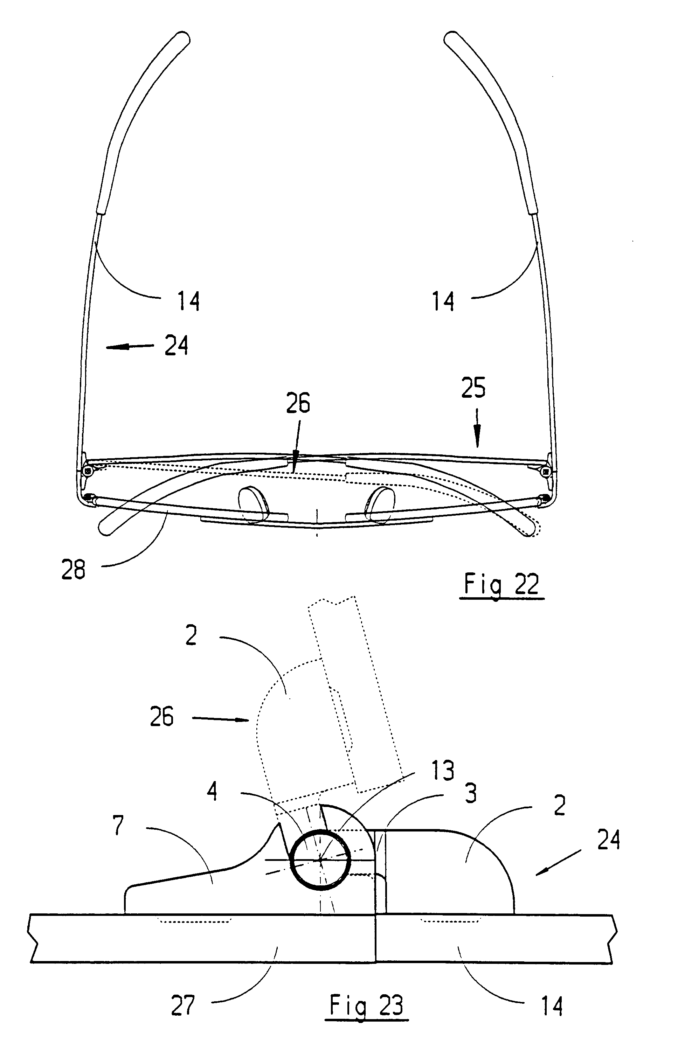

In Fig. 22 sind schematisch verschiedene Stellungen des Brillenbügels dargestellt:

Die Bügelaufschlagsstellung ist mit Bezugszeichen 24, die Bügeleinschlagstellung mit Bezugszeichen 25 und die Montage- bzw. Demontagestellung des des Bügels ist mit Bezugszeichen 26 bezeichnet. Die Montage bzw. Demontage eines Brillenbügels wird durch leichtes Durchbiegen des Brillenbügels in Richtung Fassung 28 und durch eine Schiebebewegung erreicht. Diese Bewegung soll anhand der Fig. 23 erläutert werden, in der eine schematisch vereinfachte Darstellung des Gelenkelementes gemäß Figuren 1 bis 5 und das Aufnahmeelementes gemäß Figuren 6 bis 10 dargestellt ist. Das Gelenkelement 1 ist sowohl in Bügelaufschlagsstellung 24 als auch in Montage- bzw. Demontagestellung 26 dargestellt. Durch das leichte Durchbiegen des Brillenbügels 14 wird das Gelenkelement in eine Position relativ zum Aufnahmeelement gebracht, in der der Fortsatz 3 und die Einbringöffnung 12 fluchten. Wird nun das Gelenkelement 1 in Richtung der Längsachse 13 des Stiftes 4 verschoben, so bewegt sich der Stift zunächst mit dem Stiftende mit dem kleineren Durchmesser durch die Stiftaufnahmeöffnung 10, während dann der Fortsatz 3 durchdie Einbringöffnung 12 bewegt wird. Der Fortsatz 3 besitzt eine Form, die es einerseits ermöglicht, ihn durch die Einbringöffnung 12 hindurchzuführen und die es andererseits ermöglicht, daß er nach dem Einbringen des Gelenkelementes in das Aufnahmeelement innerhalb der Arme 8,9 verschwenkt werden kann. Der Fortsatz bildet somit für den Stift 4 eine axiale Verschiebesicherung.

Die Einbringöffnung 12 befindet sich außerhalb des beim Verschwenken des Brillenbügels zwischen der Bügelaufschlagstellung 24 und der Bügeleinschlagstellung 25 sich ergebenden Schwenkbereichs des Fortsatzes 3. Mit Bezugszeichen 27 wird eine Backe bezeichnet. Wie bereits erläutert, ist es genauso gut möglich, daß das Gelenkelement 1 an der Backe 27 und das Aufnahmeelement 7 am Brillenbügel 14 befestigt ist.

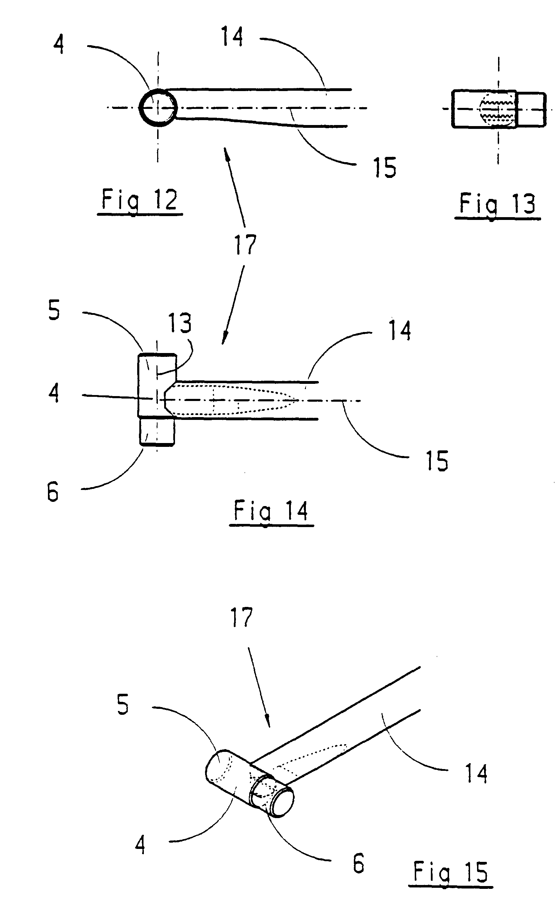

In den Figuren 12 bis 15 ist eine weitere Ausführungsform eines Gelenkelementes in Draufsicht (Fig. 14), Seitenansicht (Fig.13) und Vorderansicht (Fig. 12) dargestellt. Bei dieser Ausführungsform ist der Fortsatz 3 in das mit der Fassung zu verbindende Ende 17 des Brillenbügels 14 integriert. Der Brillenbügel 14 weist an seinem mit der Fassung zu verbindenden Ende lediglich einen Stift 4 auf, dessen Längsachse 13 im wesentlichen senkrecht zur Längsachse 15 des Bügels verläuft.

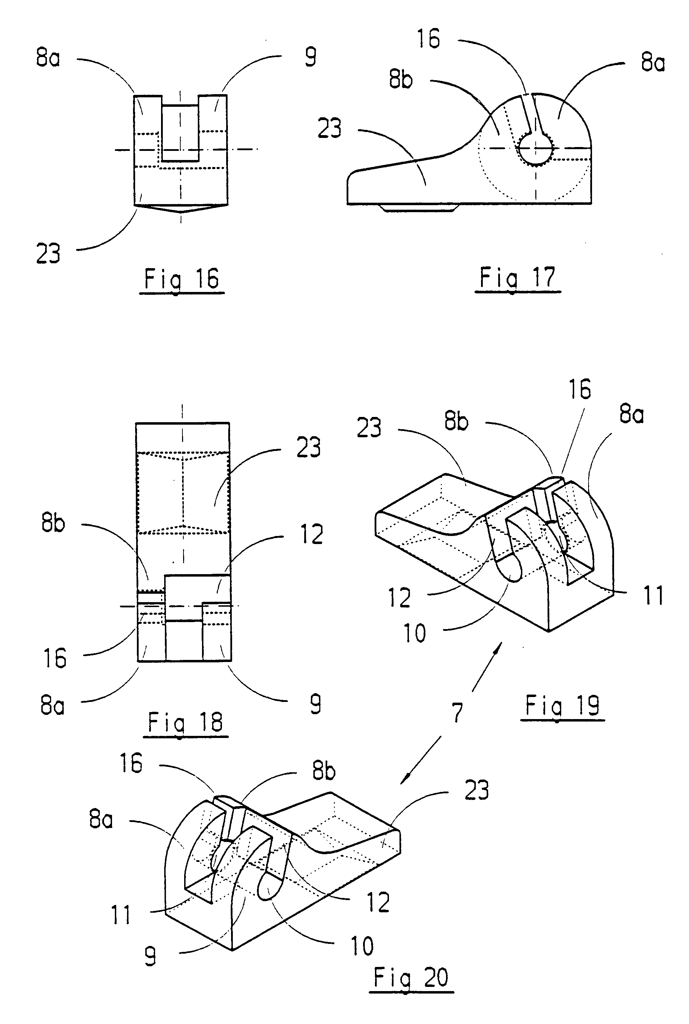

In den Figuren 16 bis 20 ist eine Ausführungsform eines Aufnahmeelementes für ein in den Figuren 12 bis 15 dargestelltes Gelenkelement dargestellt.

In den Ausführungsbeispielen ist lediglich eine Aufnahmeelementform dargestellt. Selbstverständlich liegen auch andere Formen des Aufnahmeelementes im Rahmen der beanspruchten Scharnierverbindung. So ist es z.B. möglich, daß das Aufnahmeelement eine im wesentlichen zylindrische Außenform besitzt, wobei das Aufnahmeelement beispielsweise durch ein drahtförmiges Verbindungsteil mit dem Brillenmittelteil (Fassung) verbunden sein kann.

## Patentansprüche

1. Scharnierverbindung zwischen einem Brillenbügel und einer Fassung für Brillengläser,
- wobei der Brillenbügel an seinem mit der Fassung zu verbindenden Ende ein Gelenkelement (1) aufweist, das mit einem zugehörigen.Aufnahmeelement (7) an der Fassung ohne Schnappeffekt unmittelbar kuppelbar ist,
- wobei das Gelenkelement einen mit dem Brillenbügel verbundenen Fortsatz (3) mit einem Stift (4) aufweist,
- wobei die Enden des Stiftes (5, 6) auf gegenüberliegenden Seiten des Fortsatzes über diesen hinausragen und das Aufnahmeelement zwei beabstandete Arme (8, 9) aufweist, die in montiertem Zustand jeweils eines der über den Fortsatz des Gelenkelementes hinausragenden Enden (5, 6) des Stiftes (4) umschließen,
- wobei die von den Armen jeweils umschlossene Stiftaufnahmeöffnung (10) an die Stiftenden angepasst ist und wenigstens einer der Arme das Stiftende nur teilweise unter Bildung einer Einbringöffnung (12) umschließt und
- wobei der Fortsatz beim Einsetzen des Stiftes in die Stiftaufnahmeöffnungen durch Verschieben des Stiftes in Richtung seiner Längsachse durch die Einbringöffnung hindurchführbar ist,
**dadurch gekennzeichnet, dass** die Einbringöffnung (12) außerhalb des beim Verschwenken des Brillenbügels (14) zwischen der Bügelaufschlagstellung (24) und der Bügeleinschlagstellung (25) sich ergebenden Schwenkbereich des Fortsatzes (3) liegt, wobei dieser Bereich die Begrenzung des maximal ohne Beanspruchung des Bügels möglichen Schwenkbereichs darstellt, und dass der Fortsatz (3) dabei so dimensioniert ist, dass eine Gangregulierung dadurch bewirkt wird, dass wenigstens einer der Arme (8, 9) unter Vorspannung am jeweiligen Stift (5, 6) anliegt.

2. Scharnierverbindung nach Anspruch 1, **dadurch gekennzeichnet, daß** auch der zweite Arm (8a, 8b) das zugehörige Stiftende (6) nur teilweise unter Bildung eines Spaltes (16) umschließt.

3. Scharnierverbindung nach einem der Ansprüche 1 bis 2, **dadurch gekennzeichnet. daß** der Stift (4) mit dem Fortsatz (3) und dieser mit einem Basisteil (2) verbunden ist.

4. Scharnierverbindung nach Anspruch 3, **dadurch gekennzeichnet, daß** Fortsatz (3) und Basisteil (2) aus einem Stück gefertigt sind.

5. Scharnierverbindung nach einem der Ansprüche 1 bis 2, **dadurch gekennzeichnet, daß** der Fortsatz (3) in das mit der Fassung zu verbindende Ende (17) des Brillenbügels (14) integriert ist, derart, daß der Brillenbügel (14) an seinem mit der Fassung zu verbindenden Ende (17) lediglich einen Stift (4) aufweist, dessen Längsachse (13) im wesentlichen senkrecht zur Bügellängsachse (15) verläuft.

6. Scharnierverbindung nach einem der Ansprüche 1 bis 5, **dadurch gekennzeichnet, daß** die Stiftenden (5,6) unterschiedlichen Durchmesser haben.

7. Scharnierverbindung mit einem der Ansprüche 1 bis 6, **dadurch gekennzeichnet, daß** das Aufnahmeelement (7) aus einem Material mit guten Federeigenschaften und hoher Verschleißfestigkeit besteht.

8. Scharnierverbindung nach Anspruch 7, **dadurch gekennzeichnet, daß** das Aufnahmeelement (7) aus einer Kupfer-Beryllium-Legierung oder einer Kupfer-Titan-Legierung besteht.

9. Scharnierverbindung nach einem der Ansprüche 1 bis 8, **dadurch gekennzeichnet, daß** der Fortsatz (3) und/oder der Stift (4) aus einem Material mit hoher Verschleißfestigkeit bestehen.

10. Scharnierverbindung nach Anspruch 9, **dadurch gekennzeichnet, daß** der Fortsatz und/oder der Stift aus Edelstahl bestehen.

## Claims

1. Hinge connection between a spectacle bow and a frame for spectacle lenses,
- wherein the spectacle bow has at its end to be connected to the frame a joint element (1) which can be coupled directly to an associated mounting element (7) on the frame without any snapping effect,
- wherein the joint element has an extension (3) which is connected to the spectacle bow (4) and has a pin (4),
- wherein the ends of the pin (5, 6) protrude beyond the extension on opposite sides of same and the mounting element has two arms (8, 9) at a spacing from one another and which, in the assembled state, each enclose one of the ends (5, 6) of the pin (4) protruding beyond the extension of the joint element,
- wherein the pin mounting aperture (10), surrounded in each case by the arms, is adapted to the pin ends, and at least one of the arms surrounds the pin end only partially, forming an introduction aperture (12), and
- wherein, as the pin is inserted into the pin mounting apertures, the extension can be guided through the introduction aperture by displacing the pin in the direction of its longitudinal axis,
**characterised in that** the introduction aperture (12) lies outside the swivel range of the extension (3) arising during the swivelling of the spectacle bow (14) between the bow open position (24) and the bow closed position (25), this range representing the delimitation of the maximum possible swivel range without straining the bow, and **in that** the extension (3) is here of such dimensions that regulation of movement is caused by at least one of the arms (8, 9) abutting against the respective pin (5, 6) under initial tension.

2. Hinge connection according to claim 1, **characterised in that** the second arm (8a, 8b) also surrounds the associated pin end (6) only partially, forming a gap (16).

3. Hinge connection according to one of claims 1 to 2, **characterised in that** the pin (4) is connected to the extension (3) and the latter to a base part (2).

4. Hinge connection according to claim 3, **characterised in that** extension (3) and base part (2) are produced from one piece.

5. Hinge connection according to one of claims 1 to 2, **characterised in that** the extension (3) is integrated into the end (17) of the spectacle bow (14) to be connected to the frame, in such a way that the spectacle bow (14) has at its end (17) to be connected with the frame merely one pin (4), the longitudinal axis (13) of which runs substantially perpendicular to the longitudinal axis (15) of the bow.

6. Hinge connection according to one of claims 1 to 5, **characterised in that** the pin ends (5, 6) have different diameters.

7. Hinge connection according to one of claims 1 to 6, **characterised in that** the receiving element (7) consists of a material with good spring properties and high wear resistance.

8. Hinge connection according to claim 7, **characterised in that** the mounting element (7) consists of a copper-beryllium alloy or a copper-titanium alloy.

9. Hinge connection according to one of claims 1 to 8, **characterised in that** the extension (3) and/or the pin (4) consist of a material with high wear resistance.

10. Hinge connection according to claim 9, **characterised in that** the extension and/or the pin consist of stainless steel.

## Revendications

1. Assemblage par charnière entre une branche de lunettes et une monture pour des verres de lunettes
- la branche de lunette présentant sur son extrémité à relier avec la monture un élément d'articulation (1), qui peut être couplé directement avec un élément de logement (7) spécifique sur la monture sans effet d'encliquetage,
- l'élément d'articulation présentant un prolongement (3) relié à la branche de lunettes avec une goupille (4),
- les extrémités de la goupille (5, 6) dépassant sur les deux côtés opposés du prolongement de celui-ci et l'élément de logement présentant deux bras (8, 9) espacés, qui entourent dans l'état monté respectivement l'une des extrémités (5, 6), dépassant du prolongement de l'élément d'articulation, de la goupille (4)
- l'ouverture de logement de goupille (10) entourée respectivement par les bras étant adaptée aux extrémités de la goupille et au moins l'un des bras entourant l'extrémité de la goupille seulement partiellement en formant un orifice d'introduction (12) et
- le prolongement pouvant être passé dans l'orifice d'introduction lors de l'insertion de la goupille dans les orifices de logement de goupille par le déplacement de la goupille en direction de son axe longitudinal,
**caractérisé en ce que** l'orifice d'introduction (12) se situe à l'extérieur de la plage de pivotement du prolongement (3) que l'on obtient lorsqu'on fait basculer la branche de lunettes (14) entre la position d'ouverture de branche (24) et la position de fermeture de branche (25), cette plage représentant la limitation de la plage de pivotement maximale possible sans sollicitation de la branche, et **en ce que** le prolongement (3) est dimensionné alors de façon qu'on ait un réglage du pas par le fait qu'au moins l'un des bras (8, 9) vient toucher la goupille (5, 6) respective sous l'effet de la prétension.

2. Assemblage par charnière selon la revendication 1, **caractérisé en ce que** le deuxième bras (8a, 8b) également entoure l'extrémité de goupille (6) spécifique seulement partiellement en formant une fente (16).

3. Assemblage par charnière selon l'une quelconque des revendications 1 à 2, **caractérisé en ce que** la goupille (4) est reliée au prolongement (3) et celui-ci est relié à une partie de base (2).

4. Assemblage par charnière selon la revendication 3, **caractérisé en ce que** le prolongement (3) et la partie de base (2) sont fabriqués d'une seule pièce.

5. Assemblage par charnière selon l'une quelconque des revendications 1 à 2, **caractérisé en ce que** le prolongement (3) est intégré dans l'extrémité (17) de la branche de lunettes (14) à relier à la monture, de telle sorte que la branche de lunettes (14) présente sur son extrémité (17) à relier à la monture uniquement une goupille (4) dont l'axe longitudinal (13) est sensiblement perpendiculaire à l'axe longitudinal de la branche (15).

6. Assemblage par charnière selon l'une quelconque des revendications 1 à 5, **caractérisé en ce que** les extrémités de goupille (5, 6) ont un diamètre différent.

7. Assemblage par charnière selon l'une quelconque des revendications 1 à 6, **caractérisé en ce que** l'élément de logement (7) est à base d'un matériau présentant de bonnes propriétés élastiques et une bonne résistance à l'usure.

8. Assemblage par charnière selon la revendication 7, **caractérisé en ce que** l'élément de logement (7) est à base d'un alliage de cuivre et de béryllium ou d'un alliage de cuivre et de titane.

9. Assemblage par charnière selon l'une quelconque des revendications 1 à 8, **caractérisé en ce que** le prolongement (3) et/ou la goupille (4) sont à base d'un matériau présentant une grande résistance à l'usure.

10. Assemblage à charnière selon la revendication 9, **caractérisé en ce que** le prolongement et/ou la goupille sont à base d'acier inox.
